# EUROPÄISCHE PATENTSCHRIFT

(11) **EP 3 085 921 B1**
(45) Veröffentlichungstag und Bekanntmachung des Hinweises auf die Patenterteilung: **25.12.2019**
(21) Anmeldenummer: 16163703.8
(22) Anmeldetag: 04.04.2016
(51) Int. Cl.: F02B 75/04, F16K 31/524, F16K 11/16

(54) **PLEUEL MIT EINEM UMSCHALTVENTIL**
CONNECTING ROD WITH SWITCHING VALVE
BIELLE COMPRENANT UNE SOUPAPE D'INVERSION

(30) Priorität: 21.04.2015 DE 102015106086; 15.06.2015 DE 102015109474
(43) Veröffentlichungstag der Anmeldung: 26.10.2016
(73) Patentinhaber: Hilite Germany GmbH, 97828 Marktheidenfeld (DE)
(72) Erfinder: HUTZELMANN, Stefanie, 97782 Gräfendorf (DE); MUDRA, Alexander, 02826 Görlitz (DE); SCHULZE, Dietmar, 35394 Gießen (DE)

(56) Entgegenhaltungen:
- WO-A1-2011/086154
- DE-A1-102013 107 293
- DE-A1-102013 113 432
- DE-B- 1 036 062
- DE-B- 1 208 575

## Beschreibung

### Technisches Gebiet

Die Erfindung betrifft einen Pleuel mit einem Umschaltventil gemäß dem Oberbegriff des Patentanspruchs 1.

### Stand der Technik

Bei Brennkraftmaschinen wirkt sich ein hohes Verdichtungsverhältnis positiv auf den Wirkungsgrad der Brennkraftmaschine aus. Unter Verdichtungsverhältnis wird im Allgemeinen das Verhältnis des gesamten Zylinderraumes vor der Verdichtung zum verbliebenen Zylinderraum nach der Verdichtung verstanden. Bei Brennkraftmaschinen mit Fremdzündung, insbesondere Ottomotoren, die ein festes Verdichtungsverhältnis aufweisen, darf das Verdichtungsverhältnis jedoch nur so hoch gewählt werden, dass bei Volllastbetrieb ein sogenanntes "Klopfen" der Brennkraftmaschine vermieden wird. Jedoch könnte für den weitaus häufiger auftretenden Teillastbereich der Brennkraftmaschine, also bei geringer Zylinderfüllung, das Verdichtungsverhältnis mit höheren Werten gewählt werden, ohne dass ein "Klopfen" auftreten würde. Der wichtige Teillastbereich einer Brennkraftmaschine kann verbessert werden, wenn das Verdichtungsverhältnis variabel einstellbar ist. Zur Verstellung des Verdichtungsverhältnisses sind beispielsweise Systeme mit variabler Pleuelstangenlänge bekannt, welche mit Hilfe von hydraulischen Umschaltventilen eine Exzenter-Verstelleinrichtung eines Pleuels betätigen.

Ein gattungsgemäßer Pleuel mit einem Umschaltventil ist beispielsweise aus der DE 10 2012 112 461 A1 bekannt. Das Umschaltventil weist ein Abgriffselement auf, in dessen Oberfläche eine Nut ausgebildet ist. Darüber hinaus weist das Umschaltventil einen hülsenförmigen Verbindungsabschnitt auf. Der hülsenförmige Verbindungsabschnitt weist eine erste Bohrung auf, welche das Umschaltventil mit einer ersten Hydraulikflüssigkeitsleitung verbindet. Der hülsenförmige Verbindungsabschnitt weist des Weiteren eine zweite Bohrung auf, welche das Umschaltventil mit einer zweiten Hydraulikflüssigkeitsleitung verbindet. Überdies weist der hülsenförmige Verbindungsabschnitt eine Entlüftungsbohrung auf, welche das Umschaltventil mit einem Entlüftungskanal verbindet. Das Abgriffselement ist in dem hülsenförmigen Verbindungsabschnitt angeordnet und wahlweise in eine erste Schaltstellung oder eine zweite Schaltstellung verlagerbar, wobei in der ersten Schaltstellung die in dem Abgriffselement ausgebildete Nut die erste Hydraulikflüssigkeitsleitung mit dem Entlüftungskanal verbindet und wobei in der zweiten Schaltstellung die in dem Abgriffselement ausgebildete Nut die zweite Hydraulikflüssigkeitsleitung mit dem Entlüftungskanal verbindet. Die Abdichtung in einem hülsenförmigen Verbindungsabschnitt erfolgt radial mittels des Abgriffselements. Um ein Klemmen des Abgriffselements zu verhindern, muss allerdings zwischen dem Abgriffselement und dem Verbindungsabschnitt ein Spiel vorgesehen werden, welches wiederum zu einer Leckage führt. In einem Pleuel für eine variable Verdichtung einer Brennkraftmaschine mit einer Exzenter-Verstelleinrichtung zur Verstellung der effektiven Pleuelstangenläge kann diese Leckage zu einer ungewollten Längenänderung des Pleuels und damit zu einer ungewollten Änderung der Verdichtung führen.

### Offenbarung der Erfindung

Eine Aufgabe der Erfindung ist es, ein einen Pleuel mit einem Umschaltventil zu schaffen, welches eine geringe Leckage aufweist.

Die vorgenannte Aufgabe wird nach einem Aspekt der Erfindung gelöst mit den Merkmalen des unabhängigen Anspruchs 1.

Günstige Ausgestaltungen und Vorteile der Erfindung ergeben sich aus den weiteren Ansprüchen, der Beschreibung und der Zeichnung.

Die Erfindung betrifft einen Pleuel für eine variable Verdichtung einer Brennkraftmaschine, mit einer Exzenter-Verstelleinrichtung zur Verstellung einer effektiven Pleuelstangenlänge, wobei die Exzenter-Verstelleinrichtung einen mit einem Exzenterhebel zusammenwirkenden Exzenter aufweist, mit zwei Kolben, welche jeweils in einer Hydraulikkammer verschiebbar geführt sind und in welchen an dem Exzenterhebel angreifende Exzenterstangen der Exzenter-Verstelleinrichtung gelagert sind, wobei ein Verstellweg der Exzenter-Verstelleinrichtung mittels eines Umschaltventils verstellbar ist, welches zum Steuern eines Hydraulikflüssigkeitsstrom vorgesehen ist. Durch die Änderung des Verstellwegs wird die effektive Pleuelstangenlänge geändert. Damit kann die Verdichtung einer Brennkraftmaschine gesteuert werden. Ein solcher Pleuel kann so eine Exzenter-Verstelleinrichtung umfassen, die insbesondere zum Schalten der Stellkolben in dem Pleuel für eine variable Verdichtung einer Brennkraftmaschine vorgesehen ist.

Das Umschaltventil weist ein Abgriffselement und einen hülsenförmigen Verbindungsabschnitt mit einer ersten Bohrung zum Verbinden mit einer ersten Hydraulikflüssigkeitsleitung, einer zweiten Bohrung zum Verbinden mit einer zweiten Hydraulikflüssigkeitsleitung und einer Entlastungsbohrung zum Verbinden mit einem Entlastungskanal auf. Dabei ist das Abgriffselement in dem hülsenförmigen Verbindungsabschnitt angeordnet und wahlweise in eine erste Schaltstellung oder in eine zweite Schaltstellung verlagerbar. In der ersten Schaltstellung ist die erste Hydraulikflüssigkeitsleitung mit dem Entlastungskanal und in der zweiten Schaltstellung ist die zweite Hydraulikflüssigkeitsleitung mit dem Entlastungskanal verbunden.

Erfindungsgemäß sind zwei Sperrventile vorgesehen, die in das Umschaltventil integriert sind, welche je nach Stellung des Abgriffselements einen Durchfluss von Hydraulikflüssigkeit von der ersten oder der zweiten Bohrung in Richtung Entlastungskanal freigeben oder sperren.

Vorteilhaft zeigt das Umschaltventil des erfindungsgemäßen Pleuels eine geringere Leckage der Hydraulikflüssigkeit als bekannte Umschaltventile. Mechanisch betätigte Umschaltventile führen üblicherweise ein als Kolben/Schieber ausgebildetes Abgriffselement in einem als Bohrung ausgeführten hülsenförmigen Verbindungsabschnitt eines Gehäuses. Da zwischen diesem Kolben und dem Gehäuse Spiel vorhanden sein muss, um ein Klemmen des Kolbens zu verhindern, ist ein solches Konzept üblicherweise leckagebehaftet. Eine solche Leckage an Hydraulikflüssigkeit kann zu einer ungewollten Lageänderung eines Verstellkolbens führen, der in einem Pleuel eine Verstellung eines Exzenters zur Verstellung einer effektiven Pleuelstangenlänge bewirkt. Damit kann es zu einer ungewollten Längenänderung des Pleuels und damit zu einer ungewollten Änderung der Verdichtung einer Brennkraftmaschine kommen.

Solche ungewollten Änderungen können mit dem erfindungsgemäßen Pleuel reduziert oder gar vermieden werden. Das Umschaltventil des erfindungsgemäßen Pleuels zeigt eine gegenüber dem Stand der Technik verbesserte Abdichtung von Hydraulikkammern von Verstellkolben und damit eine entscheidend verbesserte Lagestabilität eines verstellbaren Pleuels. Das Umschaltventil weist dazu zwei Sperrventile auf, die mechanisch über Profilflächen, welche als Innenprofil in dem Abgriffselement angeordnet sind, betätigt werden und so alternativ in der ersten Schaltstellung eine Verbindung zwischen der ersten Hydraulikflüssigkeitsleitung und dem Entlastungskanal herstellen und in der zweiten Schaltstellung eine Verbindung zwischen der zweiten Hydraulikflüssigkeitsleitung und dem Entlastungskanal herstellen. Das Öffnen und Schließen der Sperrventile erfolgt dabei über die in Form einer Kulisse angeordneten Profilflächen des Abgriffselements. Die Sperrventile sind dabei in das Umschaltventil integriert. Auf diese Weise kann eine geöffnete Hydraulikkammer eines Verstellkolbens des Pleuels in einen Tankabfluss in Richtung des Kurbelgehäuses entlastet werden. Die Sperrventile verhindern eine ungewünschte Leckage der Hydraulikflüssigkeit. So wird günstiger Weise ein stabiler Betrieb eines Pleuel-Verstellmechanismus für eine variable Verdichtung einer Brennkraftmaschine ermöglicht.

Durch das Umschaltventil mit den integrierten Sperrventilen wird eine im Vergleich zum Stand der Technik verbesserte Abdichtung und somit eine verbesserte Lagestabilität des erfindungsgemäßen Pleuels erreicht. Eine ungewollte Änderung der Verdichtung kann hiermit vermieden werden.

Durch die Integration der beiden Sperrventile ist es zudem möglich, auf Rückschlagventile in den Hydraulikflüssigkeitsleitungen zu verzichten, über welche die Hydraulikkammern mit Hydraulikflüssigkeit beaufschlagbar sind.

Gemäß einer vorteilhaften Ausgestaltung können die Sperrventile im Bereich der ersten und der zweiten Bohrung im hülsenförmigen Verbindungsabschnitt angeordnet sein. Damit regeln die Sperrventile günstiger Weise eine hydraulische Verbindung zwischen der ersten Bohrung, welche mit der ersten Hydraulikflüssigkeitsleitung verbunden ist, und dem Entlastungskanal sowie eine hydraulische Verbindung zwischen der zweiten Bohrung, welche mit der zweiten Hydraulikflüssigkeitsleitung verbunden ist, und dem Entlastungskanal. Alternativ kann die Verbindung zwischen der ersten Bohrung und dem Entlastungskanal geöffnet oder geschlossen sein, während in komplementärer Weise dazu die Verbindung zwischen der zweiten Bohrung und dem Entlastungskanal geschlossen oder geöffnet sein kann. Dass die Schaltstellungen komplementär gesteuert werden, wird über die Profilflächen des Abgriffselements realisiert und, da eine mechanische Ansteuerung realisiert ist, auch mit großer Zuverlässigkeit erreicht.

Gemäß einer vorteilhaften Ausgestaltung kann das Abgriffselement ein Innenprofil mit zwei Profilflächen zur Betätigung der Sperrventile aufweisen. Durch die Entkopplung der Ansteuerung der beiden Sperrventile über die getrennte Betätigung durch zwei Profilflächen sind eine sichere Bedienung der Sperrventile sowie eine gegenseitige Verriegelung günstig realisierbar. Das Innenprofil mit den beiden Profilflächen lässt dabei auch die Realisierung eines gewünschten Übergangs des Öffnungs- und Schließvorgangs zwischen den beiden Sperrventilen über eine geeignete Profilformgebung zu.

Gemäß einer vorteilhaften Ausgestaltung kann in der ersten Schaltstellung das erste Sperrventil durch Betätigung des Sperrventils über die erste Profilfläche geöffnet sein und das zweite Sperrventil geschlossen sein, während in der zweiten Schaltstellung das zweite Sperrventil durch Betätigung des Sperrventils über die zweite Profilfläche geöffnet sein kann und das erste Sperrventil geschlossen sein kann. Günstig lassen sich die Betätigungszyklen so darstellen, dass eine alternative Öffnung und Schließung der beiden Sperrventile auf jeden Fall sichergestellt ist. Die Stellungen sind über eine geeignete Profilierung des Innenprofils mit großer Sicherheit darstellbar und auch durch Auswahl eines entsprechenden Abgriffselements mit der geeigneten Formgebung in der Fertigung leicht variierbar.

Gemäß einer vorteilhaften Ausgestaltung kann das Abgriffselement mittels eines Rastelements in der ersten Schaltstellung in einer ersten Rastnut und in der zweiten Schaltstellung in einer zweiten Rastnut arretierbar ausgebildet sein. Auf diese Weise ist die Umschaltfunktion des Umschaltventils durch die mechanische Ausprägung der Verrastung sichergestellt. Damit sind auch die Zustände der Sperrventile arretierbar, da die Betätigung der Sperrventile über das Abgriffselement erfolgt und mit dessen Position im Umschaltventil mechanisch gekoppelt ist. So kann ein Sperrventil nicht ungewollt betätigt werden und in einen ungewünschten Zustand geraten. Dadurch wird eine hohe Schaltsicherheit des Umschaltventils und damit auch der Sperrventile erreicht.

Gemäß einer vorteilhaften Ausgestaltung können die Sperrventile jeweils einen in einem Gehäuse verschiebbar angeordneten Stößel als Ventilschließkörper aufweisen, welcher mittels eines Federelementes an einem am Gehäuse ausgebildeten Ventilsitz dichtend anlegbar ist. Der Stößel dient dabei sowohl als Dichtelement und Steuerelement für den Durchfluss der Hydraulikflüssigkeit durch das Sperrventil, als auch als Betätigungselement für die Ventilfunktion. Durch Druck auf den Stößel kann das Sperrventil geöffnet werden. Wird kein Druck auf den Stößel ausgeübt, wird der Stößel durch das Federelement mit seiner Dichtfläche auf den am Gehäuse ausgebildeten Ventilsitz gedrückt, dichtet dadurch den freien Durchgang durch das Sperrventil ab. So ist das Sperrventil geschlossen. Durch die Kennlinie der Feder sowie die äußere Ansteuerung des Stößels über die Profilflächen lässt sich das Verhalten des Öffnungs- und Schließvorgangs beeinflussen.

Gemäß einer vorteilhaften Ausgestaltung können die Sperrventile durch Betätigung des Stößels über eine axiale Bewegung des Abgriffselements in dem hülsenförmigen Verbindungsabschnitt mit den Profilflächen öffenbar und schließbar sein. Durch die axiale Bewegung des Abgriffselements werden die Profilflächen über das Ende des Stößels bewegt und üben so entsprechend der Formgebung der Profilflächen einen mehr oder weniger hohen Druck auf den Stößel aus. Durch den Druck der Profilflächen auf den Stößel wird die Kraft des Federelements überwunden und der Stößel kann sich gegen die Gegenkraft des Federelements bewegen. Entsprechend der Formgebung der Profilflächen erfährt der Stößel eine Auslenkung in seiner Achse, die zweckmäßigerweise radial zur Bewegung des Abgriffselements gerichtet ist. So kann eine kleine Änderung in der Höhe der Profilfläche eine gewünschte Auslenkung des Stößels und damit eine Öffnung des Sperrventils bewirken.

Gemäß einer vorteilhaften Ausgestaltung kann der Stößel mittels des Federelements durch eine bezogen auf den Stößel axiale Zugkraft an den Ventilsitz dichtend anlegbar sein. Das Federelement ist dabei so angeordnet, dass es den Stößel durch die Federkraft in den Ventilsitz zieht. Auf diese Weise ist eine zuverlässige Abdichtung des Hydraulikflusses durch das Sperrventil gewährleistet. Diese Anordnung des Federelements bewirkt eine sicherere Funktion des Sperrventils mit noch geringerer Leckage des Umschaltventils.

Gemäß einer vorteilhaften Ausgestaltung kann der Stößel im Wesentlichen zylindrisch vorgesehen sein. Eine zylindrische Form des Stößels ist sowohl vorteilhaft in der Herstellung des Stößels als auch für die sichere Funktion des Sperrventils. So kann eine Lagerung des Stößels durch Bohrungen günstig dargestellt werden, wie es standardmäßig für Ventile üblich ist. Auch die Kraftverteilung im Stößel durch Beaufschlagung über das Federelement und den Druck über die Profilflächen lässt sich so günstig gestalten.

Gemäß einer vorteilhaften Ausgestaltung kann der Ventilsitz kegelförmig ausgebildet sein. Durch einen kegelförmigen Ventilsitz lässt sich eine sichere Dichtfunktion mit einer günstigen Herstellweise verbinden. Durch die Kegelform des Ventilsitzes wird die Gegenkontur des Stößels in den Ventilsitz hineingezogen, und Fertigungstoleranzen spielen eine geringere Rolle als bei einer ebenen Kontur des Ventilsitzes. Auch ist die Dichtkontur so platzsparend in der Gesamtbauform des Sperrventils unterzubringen, sodass dadurch auch eine kompakte Bauweise begünstigt wird.

Gemäß einer vorteilhaften Ausgestaltung können der Stößel und/oder das Gehäuse wenigstens eine Hydraulikflüssigkeitsdurchflussnut aufweisen. Um ein Durchströmen einer geeigneten Menge von Hydraulikflüssigkeit zu ermöglichen, weisen der Stößel und/oder das Gehäuse des Sperrventils wenigstens eine Hydraulikflüssigkeitsdurchflussnut auf, sodass die Hydraulikflüssigkeit entlang des Stößels durch das Sperrventil fließen kann. Eine solche Nut ist fertigungstechnisch günstig zu herzustellen, indem etwa der Schaft des Stößels in geeigneter Weise eine flache Kontur aufweist, die beispielsweise durch Abfräsen des Schafts günstig herstellbar ist.

Gemäß einer vorteilhaften Ausgestaltung kann das Abgriffselement derart ausgebildet sein, dass eine axiale Bewegung des Abgriffselements zu einer radialen Bewegung des Stößels führt. Durch eine axiale Bewegung des Abgriffselements kann über eine dadurch erfolgende axiale Bewegung der Profilfläche über den senkrecht dazu in radialer Richtung angeordneten Stößel die Kraftübertragung der Profilfläche auf den Stößel günstig sein. Eine längere axiale Bewegung kann so eine radiale Bewegung des Stößels mit größerer Kraft bewirken. So kann das Sperrventil zweckmäßig betätigt werden. Das Federelement zum Schließen des Sperrventils kann für eine sichere Schließwirkung und Abdichtung geeignet stark gewählt werden. Trotzdem kann durch die axiale Bewegung des Abgriffselements der Stößel sicher betätigt werden, um ein Öffnen des Sperrventils zu bewirken.

Gemäß einer vorteilhaften Ausgestaltung kann das Federelement zwischen einem Gehäuseabsatz und einem Federteller vorgespannt angeordnet sein, wobei der Federteller als eine in einen Absatz des Stößels eingeklipste Sicherungsscheibe vorgesehen ist. Das Federelement ist zweckmäßig vorgespannt, um den Stößel in den Ventilsitz zu ziehen und somit sicherzustellen, dass das Sperrventil bei nicht-betätigtem Stößel sicher geschlossen ist. Für die Montage des Sperrventils ist es günstig, das Federelement über das Gehäuse und den Stößel zu schieben, das Federelement vorzuspannen und dann eine Sicherungsscheibe in den Stößel einzuklipsen, welche die Abstützung des Federelements am Stößel bewirkt.

Gemäß einer vorteilhaften Ausgestaltung können die Sperrventile jeweils mit einem Gehäuse in den hülsenförmigen Verbindungsabschnitt gegen einen Absatz der Bohrung eingepresst vorgesehen sein. Auf diese Weise lässt sich eine sichere Montage des Sperrventils in dem hülsenförmigen Verbindungsabschnitt erreichen. Durch den Absatz der Bohrung ist ein fester Anschlagpunkt gegeben, sodass das Sperrventil reproduzierbar montiert werden kann und eine geometrische Lage gegeben ist, welche zu einer sicheren Funktion bei der Betätigung des Stößels über die axiale Verschiebung des Abgriffselements führt.

Gemäß einer weiteren vorteilhaften Ausgestaltung können die Sperrventile jeweils ein Bandfederelement als Ventilschließkörper aufweisen, welches in einem ersten Zustand des Sperrventils an dem hülsenförmigen Verbindungsabschnitt über den Bohrungen dichtend anlegbar ist, und welches jeweils mittels eines radial bewegbaren Kugelelements betätigbar ist. Ein solches Sperrventil stellt eine alternative Ausführungsform eines Sperrventils dar. Dabei wird ein Bandfederelement sowohl als abdichtendes Element genutzt, als auch als Rückstellfeder, die das Sperrventil in nicht-betätigtem Zustand geschlossen hält. Das Bandfederelement liegt in nicht-betätigtem Zustand an dem hülsenförmigen Verbindungsabschnitt an und dichtet die Bohrung so ab. Dabei kann ein über die Profilfläche radial bewegtes Kugelelement ein Abheben des Bandfederelements von der Dichtfläche bewirken und dadurch das Sperrventil öffnen. Eine solche Ausführungsform eines Sperrventils stellt eine sehr günstig zu fertigende Möglichkeit zur Realisierung einer Schließfunktion in einem Umschaltventil dar.

Gemäß einer vorteilhaften Ausgestaltung kann das Bandfederelement mittels des Kugelelements durch eine axiale Bewegung des Abgriffselements mit der Profilfläche öffenbar und schließbar sein. Das Kugelelement kann bei einer axialen Bewegung des Abgriffselements über die Profilfläche gerollt werden und dabei die Kontur abfahren. Dabei erfährt das Kugelelement eine radiale Kraft durch die Formgebung der Profilfläche und damit eine radiale Auslenkung, welche auf das Bandfederelement übertragen wird und so zu einem Abheben des Bandfederelements von dem hülsenförmigen Verbindungsabschnitt und damit dem Dichtsitz führen kann. Auf diese Weise lässt sich das Sperrventil geeignet öffnen.

Gemäß einer vorteilhaften Ausgestaltung können die Sperrventile jeweils als vormontierte Baugruppe vorgesehen sein. So können die Sperrventile als Unterbaugruppe vorgesehen werden, welche separat montiert und getestet werden. Möglicherweise kann die Vorspannung des Federelements auf diese Weise vor Einbau in das Umschaltventil geeignet eingestellt und beispielsweise kalibriert werden. Damit ist eine günstige Herstellung des Umschaltventils zu realisieren. Auch für das Ausführungsbeispiel des Bandfederelements als schließendes Element lässt sich eine Vormontage des Bandfederelements mit einem Federhalter durchführen, sodass dann die Montage an den hülsenförmigen Verbindungsabschnitt nach Einsetzen des Kugelelements in einen Kugelsitz leicht und schnell zu bewerkstelligen ist.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: eine schematische Darstellung eines bekannten Pleuels;
- Fig. 2: eine schematische Anordnung eines bekannten Umschaltventils in dem Pleuel gemäß Fig. 1;
- Fig. 3: eine schematische räumliche Darstellung eines Umschaltventils nach einem Ausführungsbeispiel der Erfindung im Längsschnitt;
- Fig. 4: eine schematische Darstellung des Umschaltventils nach einem Ausführungsbeispiel der Erfindung in einem zweiten Längsschnitt;
- Fig. 5: eine schematische Darstellung des Umschaltventils nach einem Ausführungsbeispiel der Erfindung in einem dritten Längsschnitt;
- Fig. 6: eine schematische Darstellung des Umschaltventils nach einem Ausführungsbeispiel der Erfindung in einem Querschnitt;
- Fig. 7: eine schematische Darstellung eines geschlossenen Sperrventils des Umschaltventils gemäß den Fig. 3 bis 6 in einem Längsschnitt;
- Fig. 8: eine schematische Darstellung eines geöffneten Sperrventils des Umschaltventils gemäß den Fig. 3 bis 6 in einem Längsschnitt;
- Fig. 9: eine schematische räumliche Darstellung eines Umschaltventils nach einem weiteren Ausführungsbeispiel der Erfindung im Längsschnitt;
- Fig. 10: eine schematische Darstellung des Umschaltventils nach einem weiteren Ausführungsbeispiel der Erfindung in einem zweiten Längsschnitt;
- Fig. 11: eine schematische Darstellung des Umschaltventils nach einem weiteren Ausführungsbeispiel der Erfindung in einem dritten Längsschnitt;
- Fig. 12: eine schematische Darstellung eines geschlossenen Sperrventils des Umschaltventils gemäß den Fig. 9 bis 11 in einem Querschnitt; und
- Fig. 13: eine schematische Darstellung eines geöffneten Sperrventils des Umschaltventils gemäß den Fig. 9 bis 11 in einem Querschnitt.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

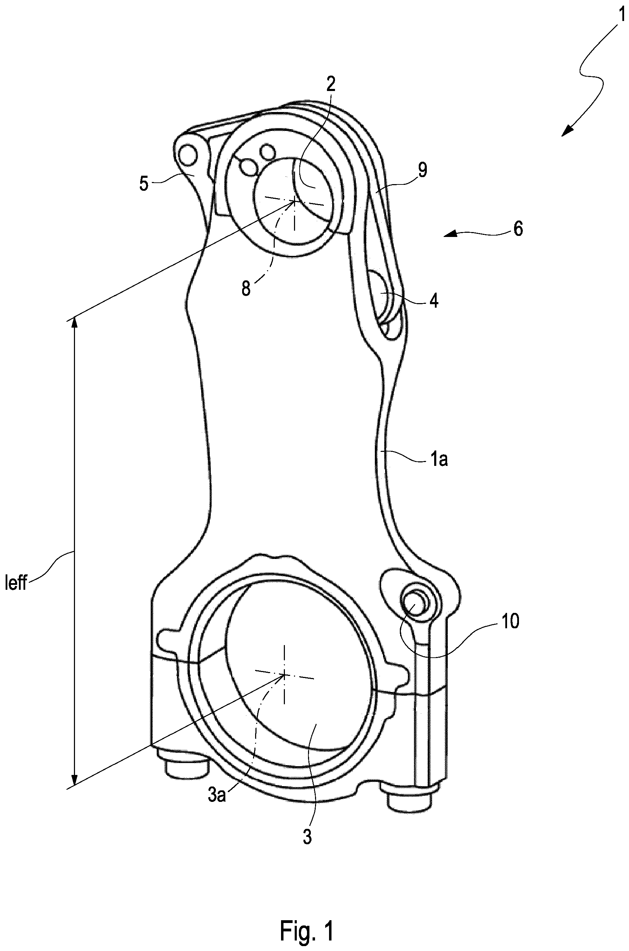

Figur 1 zeigt eine schematische Darstellung eines bekannten Pleuels 1, das eine Pleuelstange 1a und eine zumindest abschnittsweise in einem Pleuellagerauge 2 angeordnete verstellbare Exzenter-Verstelleinrichtung 6 aufweist. Die Exzenter-Verstelleinrichtung 6 weist eine exzentrisch zu einer Mittelachse 8 des Pleuellagerauges 2 angeordnete Kolbenbolzenbohrung mit einer Mittelachse 3a auf, welche einen Kolbenbolzen aufnimmt. Die Exzenter-Verstelleinrichtung 6 dient zur Verstellung einer effektiven Pleuelstangenlänge leff. Als Pleuelstangenlänge leff ist der Abstand der Mittelachse 8 des Hublagerauges 3 zu der Mittelachse 3a der Kolbenbolzenbohrung definiert.

Eine Verdrehung der verstellbaren Exzenter-Verstelleinrichtung 6 wird durch Einwirken von Massen- und Lastkräften des Verbrennungsmotors initiiert, die bei einem Arbeitstakt des Verbrennungsmotors auf die Exzenter-Verstelleinrichtung 6 wirken. Während eines Arbeitstaktes verändern sich die Wirkungsrichtungen der auf die Exzenter-Verstelleinrichtung 6 wirkenden Kräfte kontinuierlich. Die Drehbewegung oder Verstellbewegung wird durch mit Hydraulikflüssigkeit, insbesondere mit Motoröl, beaufschlagte, im Pleuel 1 integrierte, nicht dargestellte Kolben unterstützt, bzw. die Kolben verhindern ein Rückstellen der Exzenter-Verstelleinrichtung 6 aufgrund variierender Kraftwirkungsrichtungen der auf die Exzenter-Verstelleinrichtung 6 wirkenden Kräfte.

Die Kolben sind mittels Exzenterstangen 4, 5 beidseitig mit einem Exzenterkörper 9 der Exzentereinrichtung 6 wirkverbunden. Die Kolben sind in Hydraulikkammern verschiebbar angeordnet und über nicht gezeigte Hydraulikflüssigkeitsleitungen von dem Hublagerauge 3 aus mit Hydraulikflüssigkeit über nicht gezeigte Rückschlagventile beaufschlagt. Diese verhindern dabei ein Rückfließen der Hydraulikflüssigkeit aus den Hydraulikkammern zurück in die Hydraulikflüssigkeitsleitungen in eine Lagerschale des Hublagerauges 3 und ermöglichen ein Nachsaugen von Hydraulikflüssigkeit in die Hydraulikkammern. Die Hydraulikkammern sind mit einer ersten Hydraulikflüssigkeitsleitung 18 und einer zweiten Hydraulikflüssigkeitsleitung 20 verbunden, welche mit einem Umschaltventil 10 zusammenwirken.

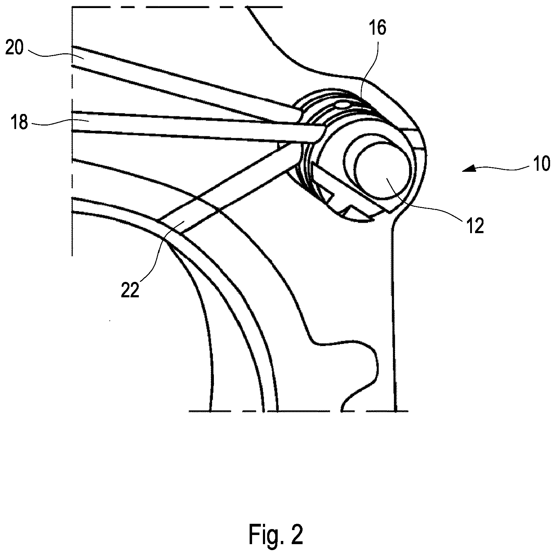

Figur 2 zeigt eine schematische Anordnung eines bekannten Umschaltventils im Pleuel 1. Das Umschaltventil 10 weist ein Abgriffselement 12 und einen hülsenförmigen Verbindungsabschnitt 16 auf, wobei das Abgriffselement 12 in dem hülsenförmigen Verbindungsabschnitt 16 angeordnet und wahlweise in eine erste Schaltstellung S1 oder eine zweite Schaltstellung S2 verlagerbar ist. In der ersten Schaltstellung S1 ist die erste Hydraulikflüssigkeitsleitung 18 über das Umschaltventil 10 mit einem Entlastungskanal 22 verbunden. Dagegen besteht in der zweiten Schaltstellung S2 eine Verbindung der zweiten Hydraulikflüssigkeitsleitung 20 mit dem Entlastungskanal 22. Über den Entlastungskanal 22 kann die Hydraulikflüssigkeit in eine Lagerschale abfließen, aus welcher die Hydraulikflüssigkeit wieder den Hydraulikkammern zur Verfügung gestellt werden kann.

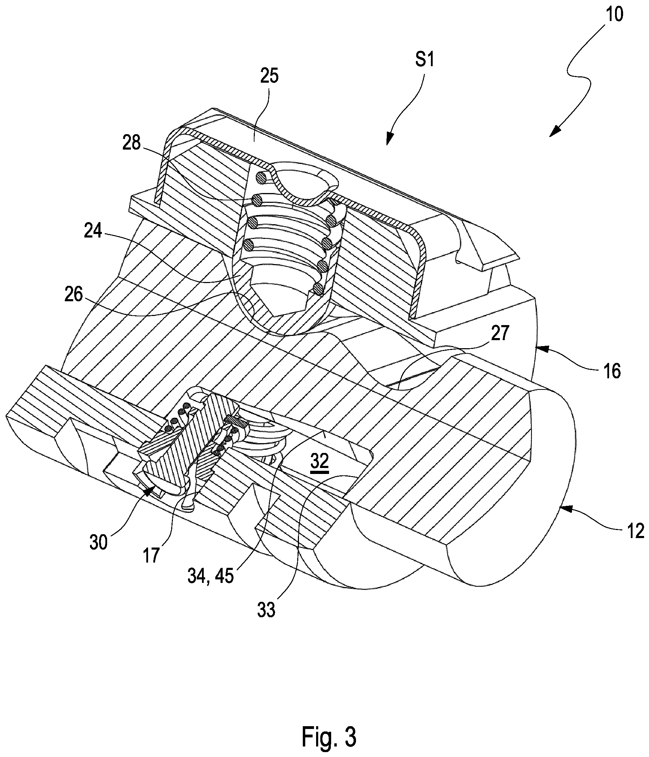

Ein Umschaltventil 10 des erfindungsgemäßen Pleuels 1 ist beispielsweise den nachfolgend beschriebenen Figuren 3 bis 6 in einem ersten Ausführungsbeispiel zu entnehmen, welche das Umschaltventil 10 jeweils in Schaltstellung S1 in drei Längsschnitten sowie einem Querschnitt zeigen. Grundsätzlich weist das Umschaltventil 10 eine gleiche Funktionsweise und einen sehr ähnlichen Aufbau wie das bekannte Umschaltventil auf.

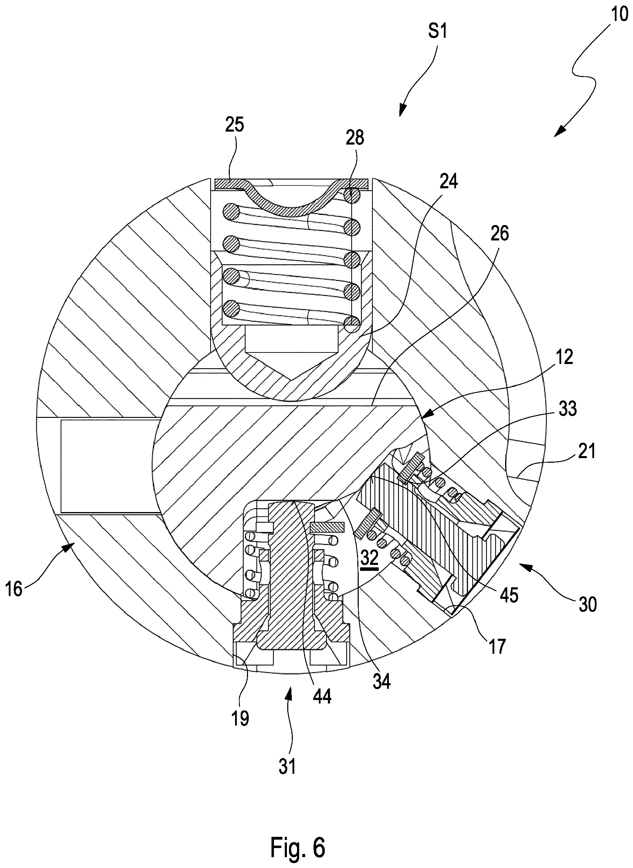

Wie ersichtlich ist, weist das Umschaltventil 10 den hülsenförmigen Verbindungsabschnitt 16 sowie das Abgriffselement 12 auf, welches zumindest teilweise in den hülsenförmigen Verbindungsabschnitt 16 eingefügt ist. Der hülsenförmige Verbindungsabschnitt 16 weist eine erste Bohrung 17 auf, welche mit der ersten Hydraulikflüssigkeitsleitung 18 verbunden ist. Eine zweite Bohrung 19 des hülsenförmigen Verbindungsabschnittes 16 ist mit der zweiten Hydraulikflüssigkeitsleitung 20 verbunden ist. Weiter ist eine in Fig. 6 gezeigte Entlastungsbohrung 21 im hülsenförmigen Verbindungsabschnitt 16 mit dem Entlastungskanal 22 verbunden.

Das Abgriffselement 12 wird mittels eines Rastelementes 24 und einer Feder 25 in der ersten Schaltstellung S1 arretiert, wobei das Rastelement 24 und die Feder 25 mit in dem Abgriffselement 12 ausgebildeten Rastnuten 26, 27 zusammenwirken. Wie ersichtlich ist dabei das Rastelement 24 mittels eines Federelementes 28 in Richtung Abgriffselement 12 vorgespannt. Insgesamt sind zwei Rastnuten 26, 27 vorgesehen, so dass jeweils eine Rastnut 26, 27 zur Aufnahme des Rastelementes 24 für die erste sowie die zweite Schaltstellung S1, S2 des Umschaltventils 10 vorgesehen ist.

Wie insbesondere Figur 6 zu entnehmen ist, sind zwei Sperrventile 30, 31 im Bereich der beiden Bohrungen 17, 19 in das Umschaltventil 10 integriert vorgesehen, welche je nach Stellung des Abgriffselements 12 einen Durchfluss von Hydraulikflüssigkeit von der ersten oder der zweite Bohrung 17, 19 über die Entlastungsbohrung 21 in Richtung Entlastungskanal 22 freigeben oder sperren.

Die beiden Bohrungen 17 und 19 sowie die Entlastungsbohrung 21 sind mit einem Hydraulikraum 32 verbunden, welcher durch eine Ausnehmung 33 ausgebildet und durch eine Innenwand des hülsenförmigen Verbindungsabschnittes 16 begrenzt wird. In der ersten Schaltstellung S1 ist das erste Sperrventil 30 geöffnet und gibt einen Durchfluss von Hydraulikflüssigkeit von der ersten Hydraulikflüssigkeitsleitung 18 über die Bohrung 17 und den Hydraulikraum 32 in Richtung Entlastungskanal 22 frei, so dass sich die mit der ersten Hydraulikflüssigkeitsleitung 18 verbundene Hydraulikkammer entleeren kann. Das zweite Sperrventil 31 ist in dieser Schaltstellung S1 gesperrt und eine Verbindung der zweiten Hydraulikflüssigkeitsleitung 20 mit dem Entlastungskanal 22 ist nicht möglich. In der zweiten Schaltstellung S2 ist dagegen das erste Sperrventil 30 geschlossen und das zweite Sperrventil 31 geöffnet, so dass sich die mit der zweiten Hydraulikflüssigkeitsleitung 20 verbundene Hydraulikkammer entleeren kann. Hiermit wird eine zuverlässige Abdichtung der jeweils geschlossenen Hydraulikverbindung ermöglicht. In den Figuren 3 bis 6 ist das Umschaltventil 10 jeweils in der ersten Schaltstellung S1 dargestellt.

Ein nicht gezeigtes, alternatives Ausführungsbeispiel sieht vor, dass ein Entlastungskanal die Hydraulikflüssigkeit direkt aus dem Hydraulikraum 32 aus der Pleuelstange 1a in Richtung eines Tanks ableitet. Ebenso ist es möglich, dass eine Hydraulikkammer in Richtung Lagerschale und die andere Hydraulikkammer in Richtung Tank abgeleitet wird.

Die Betätigung der Sperrventile 30, 31 erfolgt über ein Innenprofil 34 der Ausnehmung 33. Dieses Innenprofil 34 ist derart mit zwei Profilflächen 44, 45 ausgebildet, dass eine axiale Bewegung des Abgriffselements 12 zu einer Betätigung der Sperrventile 30, 31 führt, wobei die axiale Bewegung des Abgriffselements 12 dabei zu einer radialen Bewegung der Stößel 36 führt.

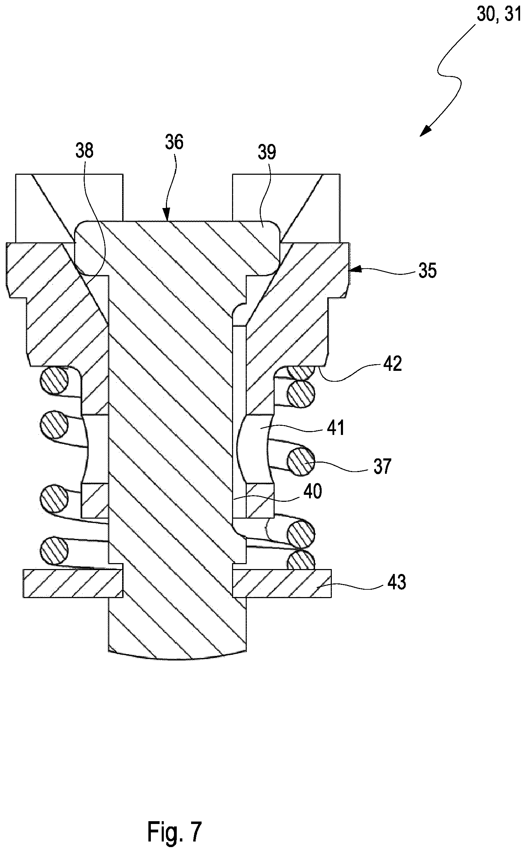

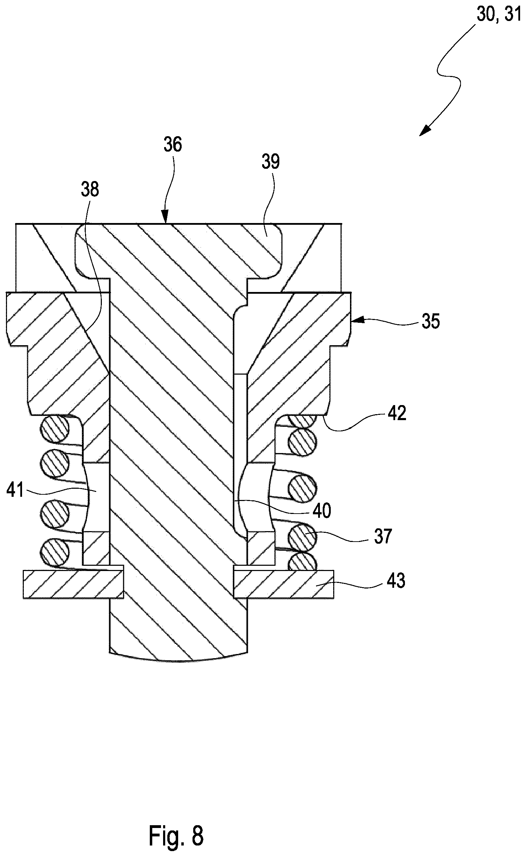

Die Sperrventile 30, 31, die in den Figuren 7 und 8 in einem geschlossenen und einem geöffneten Zustand vergrößert dargestellt sind, sind vorzugsweise jeweils als vormontierbare Baugruppe vorgesehen und mit einem Gehäuse 35 gegen einen Absatz in die Bohrungen 17, 19 eingepresst.

Die Sperrventile 30, 31 weisen jeweils einen in dem Gehäuse 35 verschiebbar angeordneten, im Wesentlichen zylindrischen Stößel 36 als Ventilschließkörper auf, dessen Kopf 39 mittels eines Federelementes 37 an einem am Gehäuse 35 ausgebildeten Ventilsitz 38 dichtend anlegbar ist. Der Stößel 36 ist dabei mittels des Federelements 37 durch axiale Zugkraft an den Ventilsitz 38 angelegt.
Das Federelement 37 ist damit auf einer Abflussseite des Sperrventils 30, 31 angeordnet. Mit anderen Worten ist es unterhalb des Ventilsitzes 38 bzw. in dem Umschaltventil 10 radial weiter innen als der Ventilsitz 38 vorgesehen.
Der Ventilsitz 38 am Gehäuse 35 ist kegelförmig ausgebildet. Alternativ ist auch eine kegelförmige Ausbildung des Stößels 36 im Bereich des Kopfes 39 möglich.

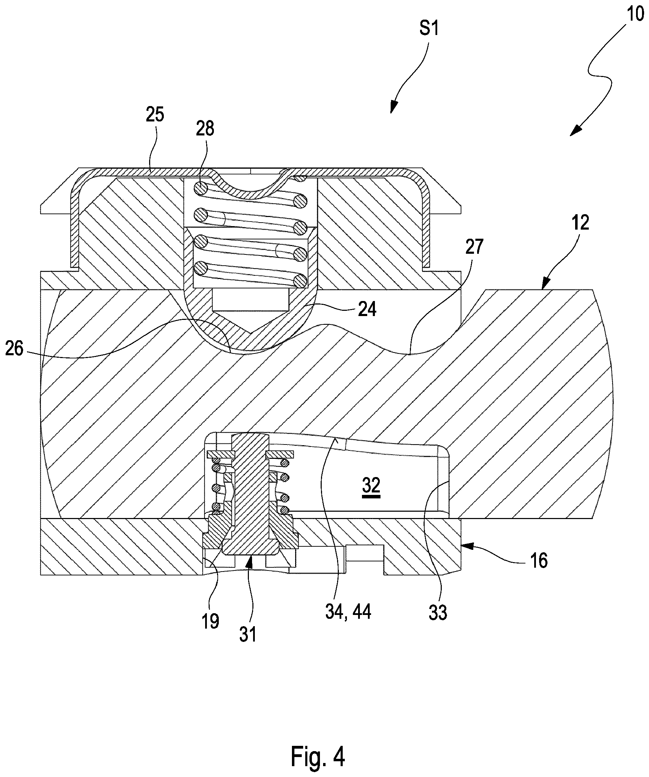

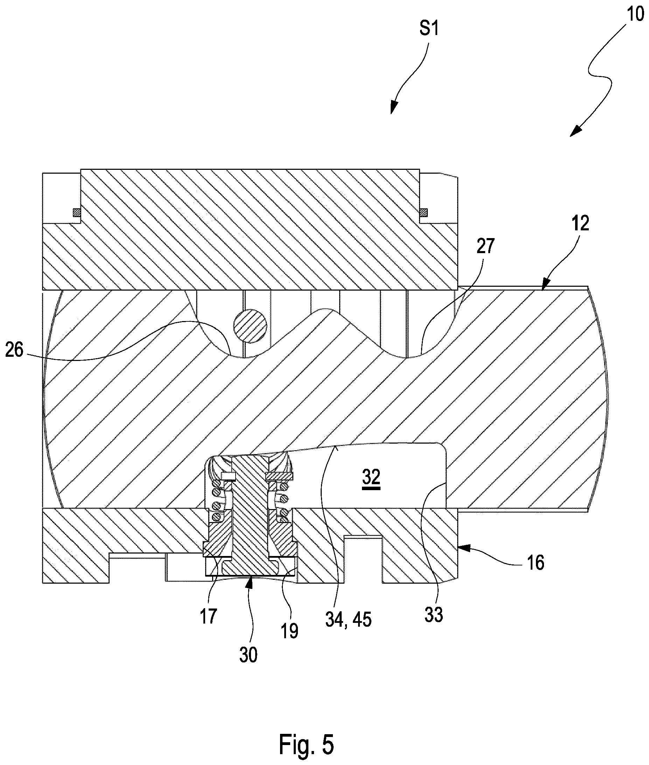

Wie insbesondere aus den Figuren 4 und 5 ersichtlich ist, liegen die Stößel 36 jeweils an einer Profilfläche 44, 45 des Innenprofils 34 der Ausnehmung 33 an. So sind die Sperrventile 30, 31 durch Betätigung des Stößels 36 über eine axiale Bewegung des Abgriffselements 12 mit den Profilflächen 44, 46 öffenbar und schließbar. Es ist zu erkennen, dass die Profilflächen 44, 45 eine entgegengesetzte Neigung aufweisen, wodurch die beschriebene alternative Betätigung der Sperrventile 30, 31 in den beiden Schaltstellungen S1, S2 in einfacher Weise realisiert werden kann.

Um ein Durchströmen einer geeigneten Menge von Hydraulikflüssigkeit zu ermöglichen, weist der Stößel 36 wenigstens eine Hydraulikflüssigkeitsdurchflussnut 40 auf. Zusätzlich können auch die in den Figuren 7 und 8 gezeigten Querbohrungen 41 im Gehäuse 35 vorgesehen sein. Gemäß einer alternativen Ausführungsform kann die Hydraulikflüssigkeitsdurchflussnut 40 auch im Gehäuse 35 ausgebildet werden.

Das Federelement 37 ist zwischen einem Gehäuseabsatz 42 und einem Federteller 43 vorgespannt angeordnet, wobei der Federteller 43 vorzugsweise als eine in einen Absatz des Stößels 36 eingeklipste Sicherungsscheibe vorgesehen ist.

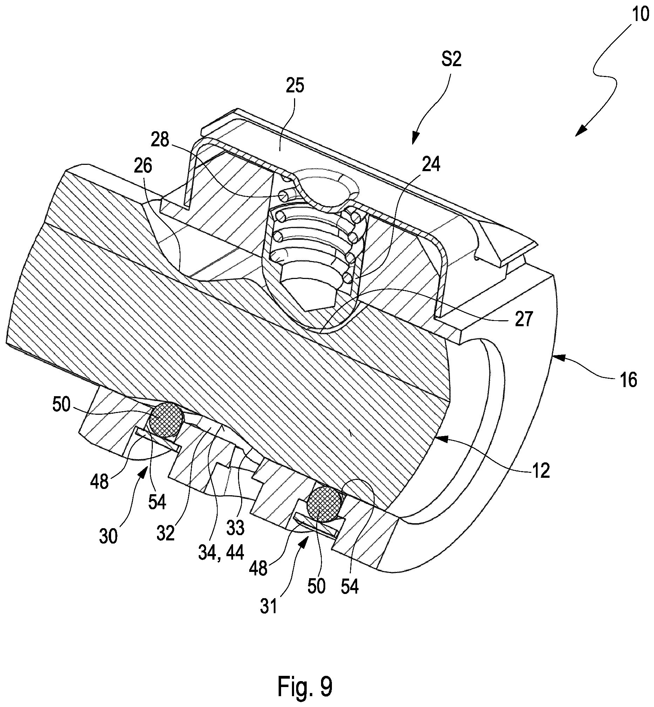

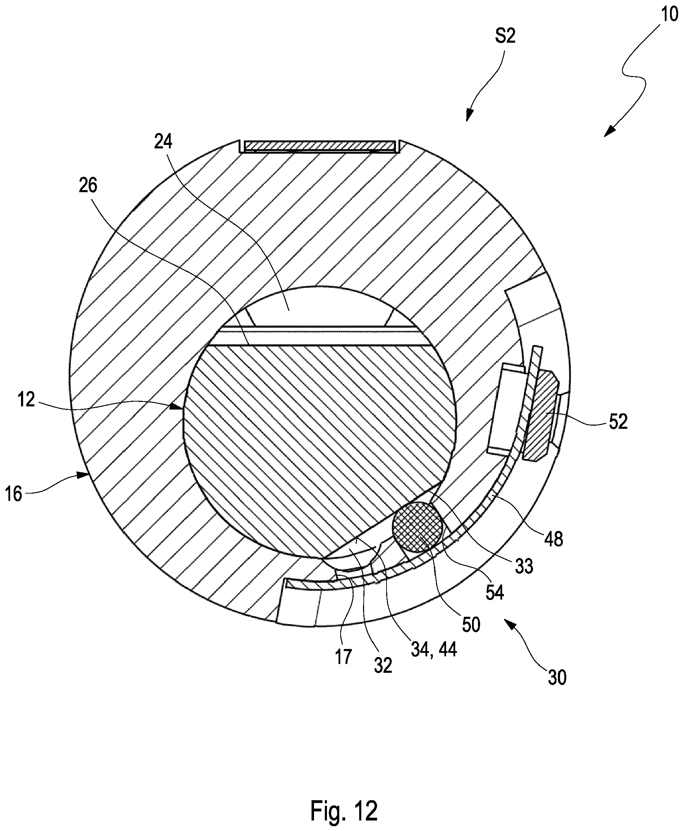

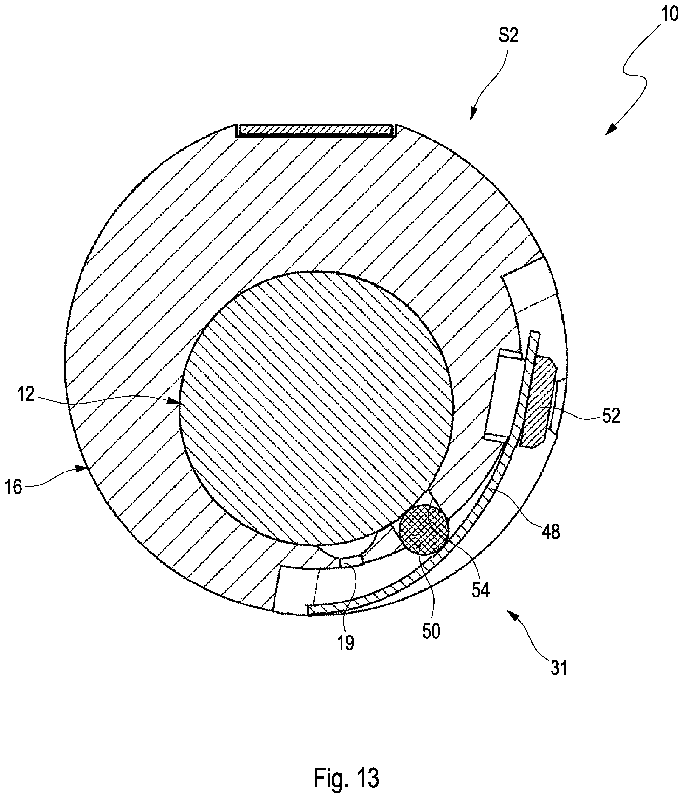

In den Figuren 9 bis 13 ist eine weitere Ausführungsform des Umschaltventils 10 dargestellt. Die Figuren 9 bis 11 zeigen schematische Darstellungen des Umschaltventils 10 in Längsschnitten, während in den Figuren 12 und 13 jeweils Querschnitte dargestellt sind. Die Ausführungsform des Umschaltventils 10 in den Figuren 9 bis 13 ist dabei in der zweiten Schaltstellung S2 dargestellt, bei der das Abgriffselement 12 so positioniert ist, dass das Rastelement 24 in der zweiten Rastnut 27 verrastet ist. Dabei ist das erste Sperrventil 30 geschlossen und das zweite Sperrventil 31 geöffnet, so dass sich die mit der zweiten Hydraulikflüssigkeitsleitung 20 verbundene Hydraulikkammer entleeren kann.

Bei dem in den Figuren 9 bis 13 dargestellten Ausführungsbeispiel weisen die Sperrventile 30, 31 jeweils ein Bandfederelement 48 als Ventilschließkörper auf, das in Umfangsrichtung des Verbindungsabschnitts 16 angeordnet ist und welches in einem ersten Zustand des Sperrventils 30, 31 an dem hülsenförmigen Verbindungsabschnitt 16 über den Bohrungen 17, 19 dichtend anlegbar ist, und welches jeweils mittels eines radial bewegbaren Kugelelements 50 betätigbar ist. Das Bandfederelement 48 ist dabei mittels des Kugelelements 50 durch eine axiale Bewegung des Abgriffselements 12 mit der Profilfläche 44 öffenbar und schließbar. Das Kugelelement 50 wird dafür durch eine axiale Bewegung des Abgriffselements 12 über das Abrollen des Kugelelements 50 auf der auf dem Abgriffselement 12 angeordneten Profilfläche 44 des Innenprofils 34 der Ausnehmung 33 aus seinem Kugelsitz 54 radial nach außen geschoben und drückt dabei das Bandfederelement 48 ebenfalls radial nach außen. Dadurch hebt das Bandfederelement 48 von dem hülsenförmigen Verbindungsabschnitt 16 ab und gibt so die Bohrung 17 oder 19 frei. Damit ist das Sperrventil 30 oder 31 geöffnet. Die Profilfläche 44 ist dabei so gestaltet, dass entweder das erste Sperrventil 30 geöffnet und das zweite Sperrventil 31 geschlossen ist (erste Schaltstellung S1) oder das erste Sperrventil 30 geschlossen und das zweite Sperrventil 31 geöffnet ist (zweite Schaltstellung S2).

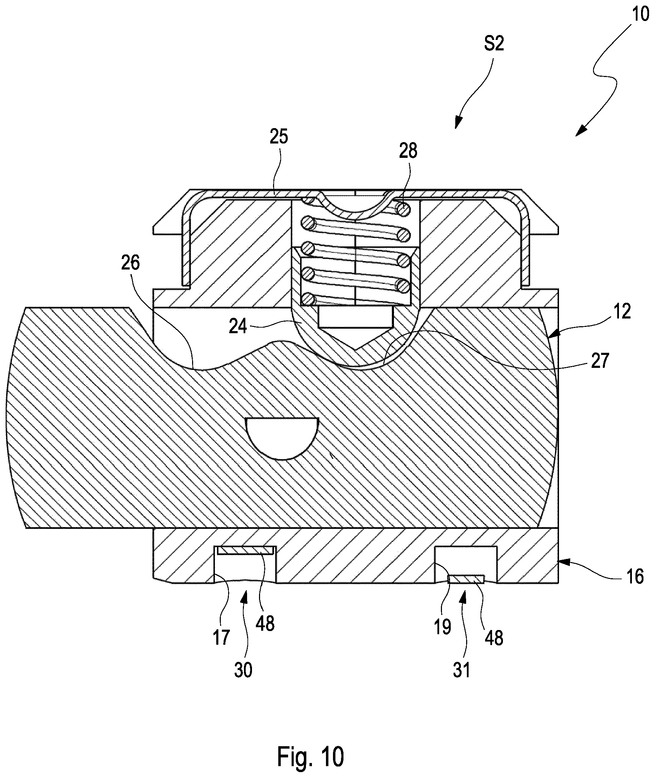

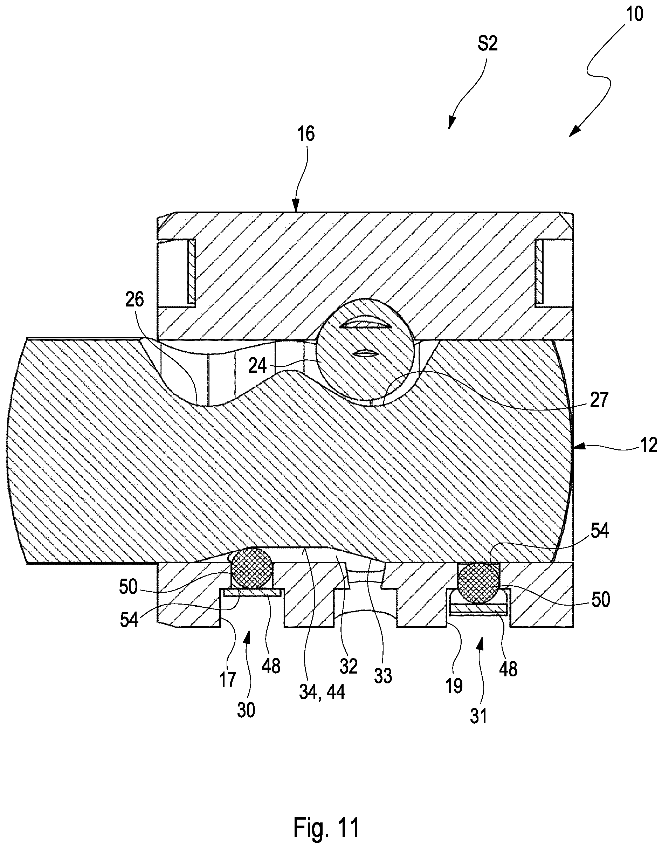

Die in den Figuren 9 und 11 dargestellten Längsschnitte sind so gewählt, dass dabei die Sperrventile 30, 31 jeweils in dem Bereich geschnitten sind, in dem die Kugelelemente 50, die in den Kugelsitzen 54 sich radial bewegen können, angeordnet sind, während der in Figur 10 dargestellte Längsschnitt so gewählt ist, dass die Sperrventile 30, 31 im Bereich der Bohrungen 17, 19 geschnitten sind. Dabei ist das erste Sperrventil 30, da das Umschaltventil 10 in der zweiten Schaltstellung S2 dargestellt ist, geschlossen, während das zweite Sperrventil 31 geöffnet ist. Das Bandfederelement 48 des ersten Sperrventils 30 liegt demzufolge an dem hülsenförmigen Verbindungsabschnitt 16 dichtend an, während das Bandfederelement 48 des zweiten Sperrventils 31 davon abgehoben ist.
In Figur 11 liegt das Kugelelement 50 des ersten Sperrventils 30 an der Profilfläche 44 an, und dringt dadurch so weit radial in das Innere des hülsenförmigen Verbindungsabschnittes 16 ein, dass das Bandfederelement 48 dadurch an dem hülsenförmigen Verbindungsabschnitt 16 dichtend anliegen kann. In dieser Position ist das erste Sperrventil 30 geschlossen, während das Kugelelement 50 des zweiten Sperrventils 31 so weit radial nach außen gedrückt ist, dass das Bandfederelement 48 des zweiten Sperrventils 31 von der äußeren Oberfläche des hülsenförmigen Verbindungsabschnittes 16 abgehoben ist und so das zweite Sperrventil 31 geöffnet ist.

In den Figuren 12 und 13 ist das Umschaltventil 10 jeweils so im Querschnitt dargestellt, dass das erste Sperrventil 30, bzw. das zweite Sperrventil 31 geschnitten ist. Das Bandfederelement 48 ist jeweils mit einem Federhalter 52 an dem hülsenförmigen Verbindungsabschnitt 16 angeordnet. Dadurch ist ein Ende des Bandfederelements 48 festgelegt. So kann das Bandfederelement 48 durch radiale Bewegung des Kugelelements 50, welche durch axiale Bewegung des Abgriffselements 12 in dem hülsenförmigen Verbindungsabschnitt 16 mit der Profilfläche 44 bewirkt wird, radial nach außen gedrückt und mit dem anderen Ende des Bandfederelements 48 von der äußeren Oberfläche des hülsenförmigen Verbindungsabschnitts 16 abgehoben werden.

In Figur 12 ist das geschlossene Sperrventil 30 des Umschaltventils 10 dargestellt, bei dem das Bandfederelement 48 die Bohrung 17 dichtend abdeckt, da das Kugelelement 50 im Bereich der Profilfläche 44 ins Innere des hülsenförmigen Verbindungsabschnitts 12 hineinragt und so das Bandfederelement 48 nicht nach außen drückt, so dass das Sperrventil 30 geschlossen ist.

In Figur 13 ist das geöffnete Sperrventil 31 des Umschaltventils 10 dargestellt, bei dem das Bandfederelement 48 durch das Kugelelement 50, welches über die Profilfläche 44 des hülsenförmigen Verbindungsabschnitts 12 radial nach außen gedrückt wird, ebenfalls radial nach außen gedrückt, so dass das Bandfederelement 48 von der Bohrung 19 abhebt und das Sperrventil 31 so geöffnet ist.

Die Erfindung ist nicht auf die obigen Ausführungsbeispiele beschränkt. Im Rahmen der Erfindung kann das Umschaltventil 10 auch andere Ausführungsformen annehmen. Auch der erfindungsgemäße Pleuel 1 ist nicht auf die gezeigte Ausführungsform beschränkt.

Durch das Umschaltventil 10 mit den integrierten Sperrventilen 30, 31 wird eine im Vergleich zum Stand der Technik verbesserte Abdichtung und somit eine verbesserte Lagestabilität des Pleuels 1 erreicht. Eine ungewollte Änderung der Verdichtung kann hiermit vermieden werden.

Durch die Integration der beiden Sperrventile 30, 31 ist es zudem möglich, auf die Rückschlagventile in den Hydraulikflüssigkeitsleitungen zu verzichten, über welche die Hydraulikkammern mit Hydraulikflüssigkeit beaufschlagbar sind. Durch die Druckdifferenz im Falle des Nachsaugens kann ein größerer Öffnungshub der Stößel 36 als durch die Betätigung mittels des Innenprofils 34 ermöglicht werden.

## Patentansprüche

1. Pleuel (1) für eine variable Verdichtung einer Brennkraftmaschine, mit einer Exzenter-Verstelleinrichtung (6) zur Verstellung einer effektiven Pleuelstangenlänge (leff), wobei die Exzenter-Verstelleinrichtung (6) einen mit einem Exzenterhebel (9) zusammenwirkenden Exzenter aufweist, mit zwei Kolben, welche jeweils in einer Hydraulikkammer verschiebbar geführt sind und in welchen an dem Exzenterhebel (9) angreifende Exzenterstangen (4, 5) der Exzenter-Verstelleinrichtung (6) gelagert sind, wobei ein Verstellweg der Exzenter-Verstelleinrichtung (6) mittels eines Umschaltventils (10) verstellbar ist, welches zum Steuern eines Hydraulikflüssigkeitsstroms vorgesehen ist, wobei das Umschaltventil (10) ein Abgriffselement (12) und einen hülsenförmigen Verbindungsabschnitt (16) mit einer ersten Bohrung (17) zum Verbinden mit einer ersten Hydraulikflüssigkeitsleitung (18), einer zweiten Bohrung (19) zum Verbinden mit einer zweiten Hydraulikflüssigkeitsleitung (20) und einer Entlastungsbohrung (21) zum Verbinden mit einem Entlastungskanal (22) aufweist, wobei das Abgriffselement (12) in dem hülsenförmigen Verbindungsabschnitt (16) angeordnet und wahlweise in eine erste Schaltstellung (S1) oder in eine zweite Schaltstellung (S2) verlagerbar ist, wobei in der ersten Schaltstellung (S1) die erste Hydraulikflüssigkeitsleitung (18) mit dem Entlastungskanal (22) und in der zweiten Schaltstellung (S2) die zweite Hydraulikflüssigkeitsleitung (20) mit dem Entlastungskanal (22) verbunden ist, **dadurch gekennzeichnet, dass** zwei Sperrventile (30, 31) vorgesehen sind, die in das Umschaltventil (10) integriert sind, welche je nach Stellung des Abgriffselements (12) einen Durchfluss von Hydraulikflüssigkeit von der ersten oder der zweiten Bohrung (17, 19) in Richtung Entlastungskanal (22) freigeben oder sperren.

2. Pleuel (1) nach Anspruch 1, **dadurch gekennzeichnet, dass** die Sperrventile (30, 31) im Bereich der ersten und der zweiten Bohrung (17, 19) im hülsenförmigen Verbindungsabschnitt (16) angeordnet sind.

3. Pleuel (1) nach Anspruch 1 oder 2, **dadurch gekennzeichnet, dass** das Abgriffselement (12) ein Innenprofil (34) mit zwei Profilflächen (44, 45) zur Betätigung der Sperrventile (30, 31) aufweist.

4. Pleuel (1) nach einem der vorhergehenden Ansprüche, **dadurch gekennzeichnet, dass** in der ersten Schaltstellung (S1) das erste Sperrventil (30) durch Betätigung des Sperrventils (30) über die erste Profilfläche (44) geöffnet ist und das zweite Sperrventil (31) geschlossen ist, während in der zweiten Schaltstellung (S2) das zweite Sperrventil (31) durch Betätigung des Sperrventils (31) über die zweite Profilfläche (46) geöffnet ist und das erste Sperrventil (30) geschlossen ist.

5. Pleuel (1) nach einem der vorhergehenden Ansprüche, **dadurch gekennzeichnet, dass** das Abgriffselement (12) mittels eines Rastelements (24) in der ersten Schaltstellung (S1) in einer ersten Rastnut (26) und in der zweiten Schaltstellung (S2) in einer zweiten Rastnut (27) arretierbar ausgebildet ist.

6. Pleuel (1) nach einem der vorhergehenden Ansprüche, **dadurch gekennzeichnet, dass** die Sperrventile (30, 31) jeweils einen in einem Gehäuse (35) verschiebbar angeordneten Stößel (36) als Ventilschließkörper aufweisen, welcher mittels eines Federelementes (37) an einem am Gehäuse (35) ausgebildeten Ventilsitz (38) dichtend anlegbar ist.

7. Pleuel (1) nach Anspruch 6, **dadurch gekennzeichnet, dass** die Sperrventile (30, 31) durch Betätigung des Stößels (36) über eine axiale Bewegung des Abgriffselements (12) in dem hülsenförmigen Verbindungsabschnitt (16) mit den Profilflächen (44, 46) öffenbar und schließbar sind.

8. Pleuel (1) nach Anspruch 6 oder 7, **dadurch gekennzeichnet, dass** der Stößel (36) mittels des Federelements (37) durch eine bezogen auf den Stößel axiale Zugkraft an den Ventilsitz (38) dichtend anlegbar ist.

9. Pleuel (1) nach einem der Ansprüche 6 bis 8, **dadurch gekennzeichnet, dass** der Stößel (36) im Wesentlichen zylindrisch vorgesehen ist.

10. Pleuel (1) nach einem der Ansprüche 6 bis 9, **dadurch gekennzeichnet, dass** der Ventilsitz (38) kegelförmig ausgebildet ist.

11. Pleuel (1) nach einem der Ansprüche 6 bis 10, **dadurch gekennzeichnet, dass** der Stößel (36) und/oder das Gehäuse (35) wenigstens eine Hydraulikflüssigkeitsdurchflussnut (40) aufweist.

12. Pleuel (1) nach einem der Ansprüche 6 bis 11, **dadurch gekennzeichnet, dass** das Abgriffselement (12) derart ausgebildet ist, dass eine axiale Bewegung des Abgriffselements (12) zu einer radialen Bewegung des Stößels (36) führt.

13. Pleuel (1) nach einem der Ansprüche 6 bis 12, **dadurch gekennzeichnet, dass** das Federelement (37) zwischen einem Gehäuseabsatz (42) und einem Federteller (43) vorgespannt angeordnet ist, wobei der Federteller (43) als eine in einen Absatz des Stößels (36) eingeklipste Sicherungsscheibe vorgesehen ist.

14. Pleuel (1) nach einem der Ansprüche 6 bis 13, **dadurch gekennzeichnet, dass** die Sperrventile (30, 31) jeweils mit einem Gehäuse (35) in den hülsenförmigen Verbindungsabschnitt (16) gegen einen Absatz der Bohrung (17, 19) eingepresst vorgesehen sind.

15. Pleuel (1) nach einem der Ansprüche 1 bis 5, **dadurch gekennzeichnet, dass** die Sperrventile (30, 31) jeweils ein Bandfederelement (48) als Ventilschließkörper aufweisen, welches in einem ersten Zustand des Sperrventils (30, 31) an dem hülsenförmigen Verbindungsabschnitt (16) über den Bohrungen (17, 19) dichtend anlegbar ist, und welches jeweils mittels eines radial bewegbaren Kugelelements (50) betätigbar ist.

16. Pleuel (1) nach Anspruch 15, **dadurch gekennzeichnet, dass** das Bandfederelement (48) mittels des Kugelelements (50) durch eine axiale Bewegung des Abgriffselements (12) mit der Profilfläche (44) öffenbar und schließbar ist.

17. Pleuel (1) nach einem der Ansprüche 6 bis 14, **dadurch gekennzeichnet, dass** die Sperrventile (30, 31) jeweils als vormontierte Baugruppe vorgesehen sind.

## Claims

1. Connecting rod (1) for a variable compression of an internal combustion engine, having an eccentric adjusting device (6) for the adjustment of an effective connecting rod length (leff), the eccentric adjusting device (6) having an eccentric which interacts with an eccentric lever (9), having two pistons which are guided displaceably in each case in a hydraulic chamber and in which eccentric rods (4, 5) of the eccentric adjusting device (6) which act on the eccentric lever (9) are mounted, it being possible for an adjusting travel of the eccentric adjusting device (6) to be adjusted by means of a switchover valve (10) which is provided for controlling a hydraulic fluid flow, the switchover valve (10) having a tapping element (12) and a sleeve-shaped connecting section (16) with a first bore (17) for connecting to a first hydraulic fluid line (18), a second bore (19) for connecting to a second hydraulic fluid line (20), and a relief bore (21) for connecting to a relief channel (22), the tapping element (12) being arranged in the sleeve-shaped connecting section (16), and it being possible for the tapping element (12) to be moved selectively into a first switching position (S1) or into a second switching position (S2), the first hydraulic fluid line (18) being connected to the relief channel (22) in the first switching position (S1), and the second hydraulic fluid line (20) being connected to the relief channel (22) in the second switching position (S2), **characterized in that** two shut-off valves (30, 31) are provided which are integrated into the switchover valve (10), which shut-off valves (30, 31) release or shut off a throughflow of hydraulic fluid from the first or the second bore (17, 19) in the direction of the relief channel (22) depending on the position of the tapping element (12).

2. Connecting rod (1) according to Claim 1, **characterized in that** the shut-off valves (30, 31) are arranged in the region of the first and the second bore (17, 19) in the sleeve-shaped connecting section (16).

3. Connecting rod (1) according to Claim 1 or 2, **characterized in that** the tapping element (12) has an inner profile (34) with two profile faces (44, 45) for actuating the shut-off valves (30, 31).

4. Connecting rod (1) according to one of the preceding claims, **characterized in that**, in the first switching position (S1), the first shut-off valve (30) is open by way of actuation of the shut-off valve (30) via the first profile face (44) and the second shut-off valve (31) is closed, whereas, in the second switching position (S2), the second shut-off valve (31) is open by way of actuation of the shut-off valve (31) via the second profile face (46) and the first shut-off valve (30) is closed.

5. Connecting rod (1) according to one of the preceding claims, **characterized in that** the tapping element (12) is configured such that it can be locked by means of a latching element (24) in a first latching groove (26) in the first switching position (S1) and in a second latching groove (27) in the second switching position (S2).

6. Connecting rod (1) according to one of the preceding claims, **characterized in that** the shut-off valves (30, 31) in each case have a tappet (36) as a valve closing body which is arranged displaceably in a housing (35) and can be set sealingly by means of a spring element (37) against a valve seat (38) which is configured on the housing (35).

7. Connecting rod (1) according to Claim 6, **characterized in that** the shut-off valves (30, 31) can be opened and closed by way of actuation of the tappet (36) via an axial movement of the tapping element (12) in the sleeve-shaped connecting section (16) with the profile faces (44, 46).

8. Connecting rod (1) according to Claim 6 or 7, **characterized in that** the tappet (36) can be set sealingly against the valve seat (38) by means of the spring element (37) by way of a tensile force which is axial in relation to the tappet.

9. Connecting rod (1) according to one of Claims 6 to 8, **characterized in that** the tappet (36) is provided in a substantially cylindrical manner.

10. Connecting rod (1) according to one of Claims 6 to 9, **characterized in that** the valve seat (38) is of conical configuration.

11. Connecting rod (1) according to one of Claims 6 to 10, **characterized in that** the tappet (36) and/or the housing (35) have/has at least one hydraulic fluid throughflow groove (40).

12. Connecting rod (1) according to one of Claims 6 to 11, **characterized in that** the tapping element (12) is configured in such a way that an axial movement of the tapping element (12) leads to a radial movement of the tappet (36).

13. Connecting rod (1) according to one of Claims 6 to 12, **characterized in that** the spring element (37) is arranged in a prestressed manner between a housing shoulder (42) and a spring collar (43), the spring collar (43) being provided as a locking washer which is clipped into a shoulder of the tappet (36).

14. Connecting rod (1) according to one of Claims 6 to 13, **characterized in that** the shut-off valves (30, 31) are provided in a manner which is pressed in each case with a housing (35) into the sleeve-shaped connecting section (16) against a shoulder of the bore (17, 19).

15. Connecting rod (1) according to one of Claims 1 to 5, **characterized in that** the shut-off valves (30, 31) in each case have a flat spiral spring element (48) as a valve closing body which, in a first state of the shut-off valve (30, 31), can be set sealingly against the sleeve-shaped connecting section (16) over the bores (17, 19), and which can be actuated in each case by means of a radially movable ball element (50).

16. Connecting rod (1) according to Claim 15, **characterized in that** the flat spiral spring element (48) can be opened and closed by means of the ball element (50) by way of an axial movement of the tapping element (12) with the profile face (44).

17. Connecting rod (1) according to one of Claims 6 to 14, **characterized in that** the shut-off valves (30, 31) are provided in each case as a preassembled module.

## Revendications

1. Bielle (1) pour une compression variable d'un moteur à combustion interne, comprenant un dispositif de réglage à excentrique (6) pour le réglage d'une longueur effective de tige de bielle (leff), le dispositif de réglage à excentrique (6) comprenant un excentrique coopérant avec un levier d'excentrique (9), comprenant deux pistons, lesquels sont guidés de manière coulissante respectivement dans une chambre hydraulique et dans lesquels sont montées des tiges d'excentrique (4, 5) du dispositif de réglage à excentrique (6) qui agissent sur le levier d'excentrique (9), une course de réglage du dispositif de réglage à excentrique (6) pouvant être réglée au moyen d'une soupape de commutation (10), laquelle est destinée à réguler un flux de liquide hydraulique, la soupape de commutation (10) comprenant un élément de prélèvement (12) et une partie de liaison (16) en forme de douille comprenant un premier alésage (17) pour la liaison à une première conduite de liquide hydraulique (18), un deuxième alésage (19) pour la liaison à une deuxième conduite de liquide hydraulique (20) et un alésage de décharge (21) pour la liaison à un canal de décharge (22), l'élément de prélèvement (12) étant disposé dans la partie de liaison (16) en forme de douille et étant déplaçable sélectivement dans une première position de commutation (S1) ou dans une deuxième position de commutation (S2), la première conduite de liquide hydraulique (18) étant reliée au canal de décharge (22) dans la première position de commutation (S1) et la deuxième conduite de liquide hydraulique (20) étant reliée au canal de décharge (22) dans la deuxième position de commutation (S2), **caractérisée en ce que** deux soupapes d'arrêt (30, 31) sont prévues, lesquelles sont intégrées dans la soupape de commutation (10) et lesquelles libèrent ou bloquent un écoulement de liquide hydraulique à partir du premier ou du deuxième alésage (17, 19) en direction du canal de décharge (22) en fonction de la position de l'élément de prélèvement (12).

2. Bielle (1) selon la revendication 1, **caractérisée en ce que** les soupapes d'arrêt (30, 31) sont disposées dans la partie de liaison (16) en forme de douille dans la région du premier et du deuxième alésage (17, 19).

3. Bielle (1) selon la revendication 1 ou 2, **caractérisée en ce que** l'élément de prélèvement (12) présente un profil intérieur (34) doté de deux surfaces profilées (44, 45) pour l'actionnement des soupapes d'arrêt (30, 31).

4. Bielle (1) selon l'une des revendications précédentes, **caractérisée en ce que**, dans la première position de commutation (S1), la première soupape d'arrêt (30) est ouverte par actionnement de la soupape d'arrêt (30) par le biais de la première surface profilée (44) et la deuxième soupape d'arrêt (31) est fermée, tandis que, dans la deuxième position de commutation (S2), la deuxième soupape d'arrêt (31) est ouverte par actionnement de la soupape d'arrêt (31) par le biais de la deuxième surface profilée (46) et la première soupape d'arrêt (30) est fermée.

5. Bielle (1) selon l'une des revendications précédentes, **caractérisée en ce que** l'élément de prélèvement (12) est réalisé de manière à pouvoir être bloqué, au moyen d'un élément d'encliquetage (24), dans une première rainure d'encliquetage (26) dans la première position de commutation (S1) et dans une deuxième rainure d'encliquetage (27) dans la deuxième position de commutation (S2).

6. Bielle (1) selon l'une des revendications précédentes, **caractérisée en ce que** les soupapes d'arrêt (30, 31) comprennent respectivement un poussoir (36) disposé de manière coulissante dans un boîtier (35) en tant que corps de fermeture de soupape, lequel peut être appliqué de manière étanche au moyen d'un élément ressort (37) contre un siège de soupape (38) formé sur le boîtier (35).

7. Bielle (1) selon la revendication 6, **caractérisée en ce que** les soupapes d'arrêt (30, 31) peuvent être ouvertes et peuvent être fermées à l'aide des surfaces profilées (44, 46) par actionnement du poussoir (36) par le biais d'un déplacement axial de l'élément de prélèvement (12) dans la partie de liaison (16) en forme de douille.

8. Bielle (1) selon la revendication 6 ou 7, **caractérisée en ce que** le poussoir (36) peut être appliqué de manière étanche contre le siège de soupape (38) au moyen de l'élément ressort (37) grâce à une force de traction axiale par rapport au poussoir.

9. Bielle (1) selon l'une des revendications 6 à 8, **caractérisée en ce que** le poussoir (36) est sensiblement cylindrique.

10. Bielle (1) selon l'une des revendications 6 à 9, **caractérisée en ce que** le siège de soupape (38) est de forme conique.

11. Bielle (1) selon l'une des revendications 6 à 10, **caractérisée en ce que** le poussoir (36) et/ou le boîtier (35) comprennent au moins une rainure d'écoulement de liquide hydraulique (40).

12. Bielle (1) selon l'une des revendications 6 à 11, **caractérisée en ce que** l'élément de prélèvement (12) est réalisé de telle sorte qu'un déplacement axial de l'élément de prélèvement (12) provoque un déplacement radial du poussoir (36).

13. Bielle (1) selon l'une des revendications 6 à 12, **caractérisée en ce que** l'élément ressort (37) est disposé de manière précontrainte entre un épaulement de boîtier (42) et une coupelle de ressort (43), la coupelle de ressort (43) étant prévue en tant que rondelle d'arrêt enclipsée dans un épaulement du poussoir (36).

14. Bielle (1) selon l'une des revendications 6 à 13, **caractérisée en ce que** les soupapes d'arrêt (30, 31) sont prévues respectivement de manière enfoncée, par un boîtier (35), dans la partie de liaison (16) en forme de douille contre un épaulement de l'alésage (17, 19).

15. Bielle (1) selon l'une des revendications 1 à 5, **caractérisée en ce que** les soupapes d'arrêt (30, 31) comprennent respectivement un élément de ressort à ruban (48) en tant que corps de fermeture de soupape, lequel élément peut être appliqué de manière étanche contre la partie de liaison (16) en forme de douille sur les alésages (17, 19) dans un premier état de la soupape d'arrêt (30, 31), et lequel élément peut être actionné respectivement au moyen d'un élément sphérique (50) mobile radialement.

16. Bielle (1) selon la revendication 15, **caractérisée en ce que** l'élément de ressort à ruban (48) peut être ouvert et peut être fermé à l'aide de la surface profilée (44) au moyen de l'élément sphérique (50) par un déplacement axial de l'élément de prélèvement (12).

17. Bielle (1) selon l'une des revendications 6 à 14, **caractérisée en ce que** les soupapes d'arrêt (30, 31) sont prévues respectivement en tant que module prémonté.
